# EUROPEAN PATENT SPECIFICATION

(11) **EP 2 085 195 B1**
(45) Date of publication and mention of the grant of the patent: **09.11.2011**
(21) Application number: 08001620.7
(22) Date of filing: 29.01.2008
(51) Int. Cl.: B26B 19/06, B26B 19/38, B23K 26/34

(54) **Trimmer comb, hair trimmer comprising a trimmer comb and method of manufacturing a trimmer comb**
Schneidekamm, Haarschneidegerät mit einem Schneidekamm und Herstellungsverfahren für einen Schneidekamm
Peigne effileur, rasoir effileur comprenant un peigne effileur et procédé de fabrication d'un peigne effileur

(43) Date of publication of application: 05.08.2009
(73) Proprietor: Braun GmbH, 61476 Kronberg (DE)
(72) Inventor: Geiser, Klaus Dieter, 61267 Neu Anspach (DE); Larscheid, Andreas, 65779 Kelkeim (DE); Behrendt, Jürgen, 65611 Brechen (DE)

(56) References cited:
- US-A- 1 780 276
- US-A- 5 600 890
- US-A- 5 802 932
- US-B1- 6 405 439
- US-B2- 6 973 855

## Description

The invention is concerned with a trimmer comb, a hair trimmer device comprising a trimmer comb, a hair removal device comprising a hair trimmer device, and a method of manufacturing a trimmer comb.

Japanese patent application JP 02-052688 discloses a trimmer comb having a toothed front side, where the tip of each trimmer comb tooth has a hemispherical nose for assuring a pleasant skin contact. It is described that the trimmer comb is manufactured by a ceramic powder injection and sintering process.

The disadvantages of this manufacturing process are the involved costs and the need to use a ceramic material, which is rather brittle and insofar less favourable over steel as trimmer comb material in case of a thin trimmer comb.

International patent application WO 2007/069177 A2 also discloses thickened tips of trimmer comb teeth, specifically focusing on the problem of hooking of trimmer comb teeth into skin pores or hair channels, causing painful injuries.

The disadvantage of WO 2007/069177 A2 is that the required diameter of the thickenings also requires the use of a thick trimmer comb base sheet. Any specific manufacturing process is not disclosed by this document.

US 6,405,439 B1 discloses a hair-cutting apparatus including a toothed cutting device and a bent second portion.

It is therefore an object of the present invention to provide a trimmer comb and a manufacturing process for a trimmer comb that overcome the disadvantages of the prior art trimmer combs and that are specifically suitable for pleasant skin contact sensation and reduced risk of injuries.

This object of the invention is solved by a trimmer comb according to claims 1 and 12 and by a method of manufacturing a trimmer comb according to claim 16. Further embodiments are given by the dependent claims.

A trimmer comb as proposed comprises a base sheet with a toothed front side that has at least a guard tooth having a thickened tip and that is characterised by its manufacturing process that comprises the following steps (wherein step a and step could be realized as a single combined step):
a. Forming an intermediate guard tooth (that has a basis at the base sheet and extends from the base sheet) that has a protrusion (or portion) that extends beyond a (planned) skin contact edge.
b. Bending the protrusion over (at a bending line so that the bent-over portion does not extend beyond the (planned) skin contact edge) to form a bent-over portion of the intermediate guard tooth.
c. Applying energy to the bent-over portion from an energy source, in particular a laser source, so that a molten tip portion is formed. In the step of applying energy, the material provided by the bent-over portion of the intermediate guard tooth is molten and forms a molten tip portion, preferably only on the side to which the protrusion was bent over, which usually will be the skin side of the final trimmer comb, i.e., the side of the trimmer comb that will be used for contacting the skin in a regular use operation of a hair trimmer device in which the trimmer comb will be employed.

By providing a protrusion of the intermediate guard tooth that is bent-over, base sheet material is provided on one side of the intermediate guard tooth. This material can be molten and hence can form a thickened tip having a diameter much larger as the base sheet thickness, as additional material for the thickened tip was provided. Today's technology simply applies energy to the tips of teeth to round them and to form thickened tips. The proposed trimmer comb can have very large sized thickened tips (formed only on one side of the trimmer comb due to bending the protrusion and applying energy to the bent-over portion so that the molten material will be supported by the guard tooth) while very thin base sheet material can be used. E.g., a 0.3 mm base sheet material can be used while thickened tips with a diameter of 0.7 mm can be formed due to the extra material provided by the bent-over portions. The large sized thickened tips (the molten tip portions) ensure a pleasant skin contact sensation due to the smoothness of the surface of the molten material, and they effectively avoid hooking of the guard tooth tips into skin pores or hair channels due to their sheer size.

In one embodiment, the trimmer comb has at least a narrow tooth that is arranged between two guard teeth. The narrow tooth has a non-thickened tip. In particular, the narrow tooth is extending from the base sheet until a point lying between the base sheet and the skin contact edge. Even though the guard tooth can have very large sized thickened tips, the additional narrow tooth arranged between two guard teeth allows that hairs can feed into tooth gaps between the guard teeth and the narrow teeth. The narrow tooth allows having low width tooth gaps that effectively avoid that thin and flexible as present in the armpit or in the intimate area penetrate through the tooth gaps and gets cut. With guard tooth a compromise between size of the thickened tips, width of the guard teeth and width of the tooth gaps would be necessary (which is acceptable for thick base sheets and rather wide guard teeth). In particular, the narrow tooth extends to about the centre of the thickened tip. By reducing the length of the narrow tooth in comparison to the guard teeth, it is effectively avoided that the tip of the narrow tooth can hook into any skin pore or hair channel.

In a sophistication of the previous embodiment, the width of the narrow tooth is smaller than the width of the guard teeth. Assuming a tapered form of the teeth, the width of a tooth can be defined as the centre width measured at a centre line between basis of the tooth and tip that is oriented perpendicular to the direction of extension of the tooth. By reducing the width of the narrow teeth, a small average spacing between tooth gaps can be realized while having guard tooth of a large width (e.g. the guard teeth could have a centre width of about 0.55 mm and the narrow teeth could have a centre width of 0.3 mm). The small average spacing ensures a high cutting efficiency of the hair trimmer employing such a trimmer comb.

In a further embodiment, the centre spacing distance between the narrow tooth and an adjoining tooth gap is smaller than the centre width of the guard tooth, in particular the centre spacing distance between the narrow tooth and an adjoining tooth gap is about the centre width of the narrow tooth. In general, a small tooth gap avoids effectively the penetration of even flexible skin through the tooth gaps, which would lead to cutting of the skin and hence painful injuries. The centre spacing distance between the narrow tooth and an adjoining tooth gap is to be optimized according to the given parameters as base sheet thickness, diameter of the molten tip portion, centre width of the narrow tooth etc.

In an embodiment, the base sheet has a thickness lower than 0.4 mm, in particular lower than 0.35 mm and more particularly lower or equal to 0.3 mm. It needs to be noted again that so far no technology was available to use standard steel base sheets of a low thickness as 0.3 mm and to provide large sized thickened tips. With the proposed trimmer comb this is possible.

In another embodiment the molten tip portion has a diameter that is about two times the thickness of the base sheet or even more. By providing the right bent-over portion as source for material for the molten tip portion, such large sized molten tip portions can be realized.

In a further embodiment, the molten tip portion formed by applying energy to the bent-over portion and melting the respective material remains partially enclosed by a non-molten remainder. This can be achieved by fine-tuning the amount of energy applied to the bent-over portion. As an effect, only the upper part of the bent-over portion will be molten and a lower part remains unaffected by the energy. As a result, the molten tip portion, usually a spherical knob, is formed only on the side to which the protrusion was bent over and lie on a support of non-molten tooth material. This leads also to the effect, that the side of the trimmer that is concluded by the non-molten remainder - usually the blade side of the trimmer comb - can be grinded or polished after formation of the molten tip portions without the generation of sharp edges and without reducing the size of the molten tip portion.

In another embodiment, the length of the bent-over portion is at least twice the thickness of the base sheet, in particular length of the bent-over portion is even thrice or four times the thickness of the base sheet. The length of the base sheet is one major factor of providing material for the molten tip portion. In a further embodiment, the protrusion has a middle section that is wider than the protrusion at the skin contact edge(which means that the bent-over portion also has this wide middle section). It has been found that a wide middle section is optimal for providing material from which the molten tip portion is formed.

A trimmer comb as proposed is also characterized by having a base sheet that has a toothed front side that has at least a guard tooth that has a thickened tip that comprises a molten tip portion formed only on one side (usually the skin side) of the trimmer comb and a non-molten remainder concluding the thickened tip on the opposite side (usually the blade side) of the trimmer comb.

The invention also is concerned with a hair trimmer device in which a proposed trimmer comb is utilized and the invention further is concerned with a hair removal device in which such a hair trimmer device is a (integral) part.

A method of manufacturing a trimmer comb as proposed comprises the steps of:
a. Forming a base sheet that has a toothed front side where at least a protrusion of an intermediate guard tooth extends of a (planned) skin contact edge of the trimmer comb.
b. Bending the protrusion over to a side of the base sheet, in particular bending the protrusion over by an angle of about 90 degrees, so that a bent-over portion is formed.
c. Applying energy from an energy source, in particular from a laser source, to the bent-over portion of the intermediate guard tooth so that a molten tip portion is formed.

In one embodiment of the method, the steps of forming and bending are performed in a single step, e.g. a combined stamping and folding process.

In another embodiment of the method, the energy is applied to a centre section of the bent-over portion; in particular the energy is applied onto the side facing the trimmer comb. As a result, the centre section of the bent-over portion melts first on the inside (the side that faces the trimmer comb) and the part of the bent-over section that extends above the centre section topples over onto the inside of the intermediate guard tooth or sinks into the molten mass, so that the molten tip portion is fully formed on one side of the trimmer comb and also on the inside, so that the line at which the protrusion was bent over also represents the outer extension of the final molten tip portion.

In a further embodiment, the amount of energy that is applied to the bent-over portion is such that only material on the side to which the bent-over portion was bent melts and a non-molten remainder remains that concludes the guard tooth on the side opposite to the side where the molten tip portion is formed. In other words, the molten tip portion remains partially enclosed by a non-molten remainder.

The invention will be further described in detail by explanation of exemplary embodiments and by reference to figures. In the figures
- Fig. 1: shows an exemplary detail of an exemplary trimmer comb having guard teeth for skin protection and narrow teeth for high cutting efficiency,
- Fig. 2: shows a schematic drawing of an exemplary embodiment of a toothed front side of a trimmer comb in a top view onto the comb plane,

- Fig. 3: shows a schematic drawing of a frontal view onto a toothed front side of a trimmer comb and a trimmer blade, where at the trimmer comb various reali- zation possibilities of guard teeth are indicated,
- Fig. 4: shows a perspective view onto an exemplary intermediate trimmer comb dur- ing manufacturing, where a detail of the toothed front side is magnified,
- Fig. 5: shows a top view onto the exemplary intermediate trimmer comb as shown in Fig. 4,
- Fig. 6: shows a top view onto a detail of an intermediate trimmer comb,
- Fig. 7: shows a frontal view onto the toothed front side of the intermediate trimmer comb as shown in Fig. 4,
- Fig. 8: shows a side view onto the intermediate trimmer comb as shown in Fig. 4 and indicates the application of energy onto a bent-over portion of a guard tooth,
- Fig. 9: shows a side view onto a trimmer comb in its final stage after energy had been applied to the bent-over portion so that a molten tip portion resulted,
- Fig. 10: shows a perspective view onto a trimmer comb in its final stage,
- Fig. 11: shows a magnification of a detail of the toothed front side of the trimmer comb as shown in Fig. 10, and
- Fig. 12: shows an exemplary hair removal device in which a trimmer comb is used as a part of a hair trimmer of the hair removal device.

A hair trimmer device for trimming hair usually comprises a trimmer comb and a trimmer blade, both having toothed front sides that have teeth that are arranged in a side-by-side manner and that extend in a comb plane and a blade plane, respectively. In a mounted state, the trimmer comb and the trimmer blade are arranged on top of each other so that the toothed front sides are superposed in a tight-fit manner, usually under pre-stress, e.g. applied by a spring. In an operation state, the toothed front sides of the trimmer comb and the trimmer blade are moved relatively to each other so that hairs that feed into the teeth gaps will be sheared off or cut off. Such a hair trimmer device, e.g. a beard trimmer, a long hair trimmer, a precision trimmer for facial hairs etc., could be a stand-alone device or the hair trimmer device could be a (integral) part of a different device, e.g. a hair removal device comprising a hair removal unit, such as an electric shaver or a wet shaver or an epilator head, and a hair trimmer device.

In the following, the description focuses on various embodiments of trimmer combs, but it is to be understood that the subject matter of the description shall encompass also hair trimmer devices and hair removal devices in which such a trimmer comb is employed.

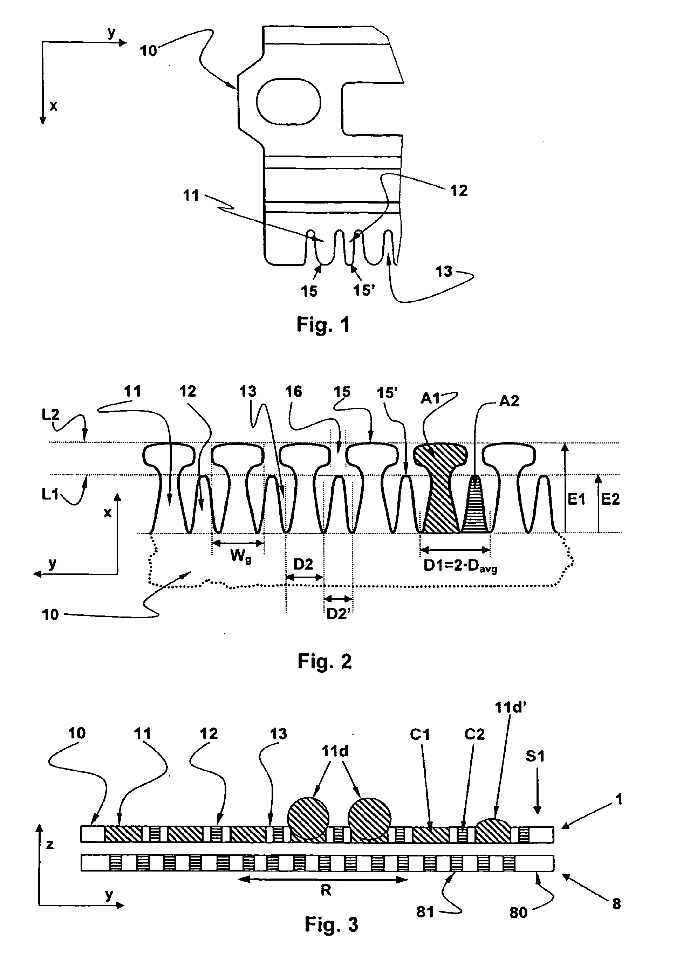

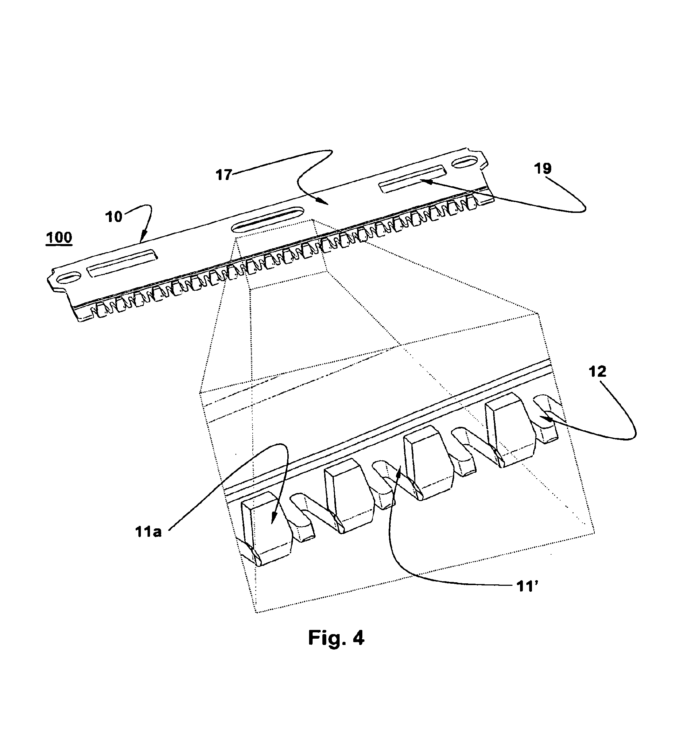

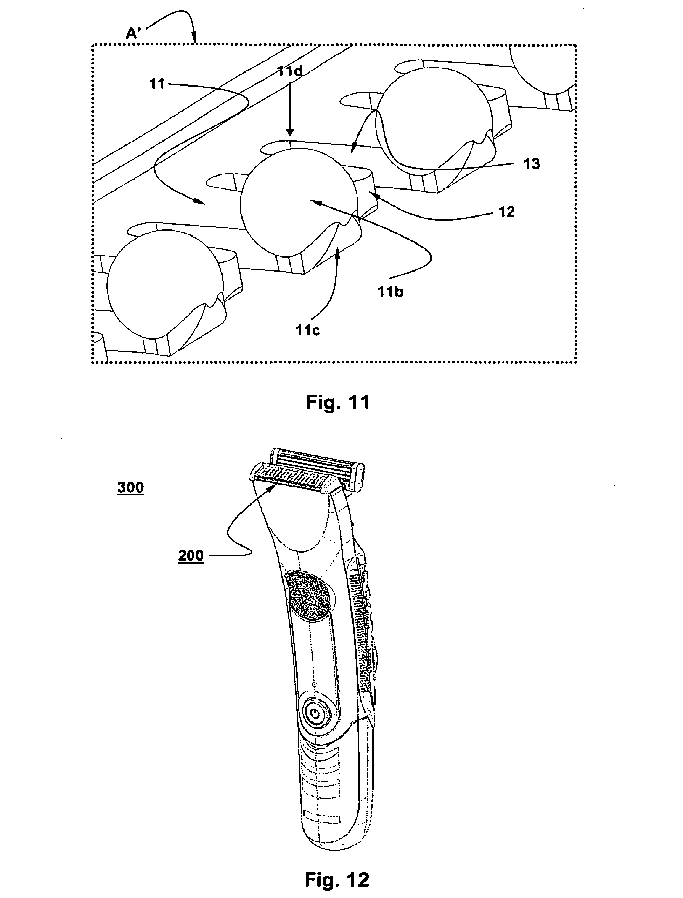

Fig. 1 shows a detail of a trimmer comb (the shown detail corresponds to the detail A as indicated in Fig. 3 for another embodiment of a trimmer comb) that extends in a trimmer plane, where a Cartesian coordinate system spanning the trimmer comb plane is indicated, which coordinate system has an axis x that extends in a tooth extension direction and an axis y that extends in a longitudinal extension direction of the trimmer comb. The trimmer comb comprises a base sheet 10. The base sheet 10 has a toothed front side that has, in contrast to what is known from prior art trimmer combs, a first plurality of teeth 11 ("guard teeth") and a second plurality of teeth 12 ("narrow teeth") that have two different tooth geometries, in particular the guard teeth 11 have a wider width than the narrow teeth 12 (the tooth width is defined in the longitudinal extension direction of the trimmer comb, viz. the y direction as indicated by the Cartesian coordinates) and usually shall mean the centre width of the tooth - it is referred to W_{c} and W_{c} in Fig. 4), where the guard teeth 11 and the narrow teeth 12 are arranged side-by-side in an alternating manner. Each guard tooth 11 has a tip 15 that is wider than a tip 15' of a narrow tooth 12. Even though it is shown in Fig.1, which shows an exemplary embodiment of a trimmer comb as proposed, that a single narrow tooth 12 is arranged between two guard teeth 11, any other periodic or non-periodic arrangement of guard teeth 11 and narrow teeth 12 should be covered by the subject matter of the description. The guard teeth 11 with their wide tips 15 serve to press down the skin, so that cutting the skin, especially in body areas where flexible and thin skin is present (e.g. in the armpit and the intimate area), is efficiently suppressed. In a further embodiment, the tips 15 of the guard teeth 11 are chosen so wide that they would not hook into a hair follicle opening at the skin surface (e.g. the width of the tips 15 could be 0.6 mm - 1.0 mm). As the hair follicles openings at the skin surface (also named hair channels), specifically in the intimate area, are rather large in diameter (and further because of the funnel-like structure of the hair channels at the skin surface and because of the high flexibility of the skin in the intimate area), one would choose a rather large width of the tips 15 of the guard teeth 11. Without prejudice, the tips 15 of the guard teeth 11 (and also the tips 15' of the narrow teeth 12) could be rounded for a gentle skin feeling or the tips 15 of the guard teeth 11 could be thickened as is known in the art, e.g. the teeth of the trimmer comb utilized in the Braun Lady Shaver have laser-molten and thickened tips since 1985 to improve the skin contact sensation of the trimmer comb (Fig. 3 shows a schematic depiction of such a thickened tip 11d'). In a different embodiment, the guard teeth 11 extend beyond the narrow teeth 12 in the x direction so that the possibility of hooking of the narrow teeth 12 into hair channels is even further reduced (it is also referred to Fig. 2 and Fig. 11 for this feature). It is noted that the tooth gaps 13 between the guard teeth 11 and the narrow teeth 12 are chosen rather narrow (in an exemplary embodiment, the centre width of the tooth gaps 13 has about the same size as the centre width of the narrow teeth 12 - e.g. the centre width of the narrow teeth 12 could be about 0.3 mm or even smaller). In combination with the wide guard teeth 11 and the narrow teeth 12, the narrow tooth gaps 13 ensure that even the flexible skin in the intimate area cannot penetrate through the tooth gaps 13 and cutting of the skin is avoided, while a high efficiency of the hair cutting performance of a hair trimmer device employing such a trimmer comb is ensured. It is shown that the narrow teeth have not only a less wide tip than the guard teeth but they have in general a reduced geometry. In the shown embodiment, the reduced geometry is obtained by narrow teeth that are less wide than the guard teeth over their complete extension length. Additionally or alternatively, as mentioned above, the reduced geometry could be obtained by a reduced extension length of the narrow teeth.

In Fig. 2 a schematic cut-out detail of another exemplary embodiment of a toothed front side of a trimmer comb as proposed is shown. The toothed front side of the base sheet 10 has again guard teeth 11 and narrow teeth 12 that are arranged in an alternating side-by-side manner. The guard teeth 11 have a mushroom-like geometry, where the tips 15 of the guard teeth 12 are widened similarly to the head of a mushroom. The narrow teeth 12 have a reduced geometry when compared to the guard teeth 11. They slightly taper from the base of the narrow teeth 12 at the base sheet 10 to the tips 15' of the narrow teeth 12 and are generally less wide than the guard teeth 11. The guard teeth 11 extend in x direction until a line L2 that represents a skin contact edge. The narrow teeth 12 extend in x direction only until a line L1. The mushroom-like tips 15 of the guard teeth 11 are formed between line L1 and line L2. As the narrow teeth 12 extend only until line L1, the tips 15 of the guard teeth 11 can be made rather wide, as the spacing area between the tips 15 is not needed by the tips 15' of the narrow teeth 12. In this way, wide tips 15 can be formed; those wide tips 15 serve to press down the skin and also, in case the width of the tips 15 is chosen wide enough, they do not hook into skin pores or hair channels. Still, a gap 16 sufficiently wide to feed hairs into the teeth gaps 13, where the hairs will ultimately be cut in a use operation, remains. As the stems of the mushroom-like formed guard teeth 11 can be made less wide as the tips 15 of the guard teeth 11, a low average spacing distance D_{avg} (measured in y direction) between guard teeth 11 and narrow teeth 12 can be achieved, so that a high cutting efficiency of the proposed trimmer comb is obtained. The individual base spacing of a guard tooth, measured from the base centre of a tooth gap 13 on one side of a guard tooth 11 to the base centre of a tooth gap 13 on the other side of the same guard tooth 11, is D2 and the base spacing of a narrow tooth measured between a base centre of a tooth gap 13 on one side of a narrow tooth 12 to the base centre of a tooth gap 13 on the other side of the same narrow tooth 12, is D2', so that D1 = D2 + D2' = 2 D_{avg}. It is a specific feature of the discussed embodiments that D2 > D2', as the smaller base spacing D2' of the narrow teeth 12 leads to the good cutting efficiency, while the larger base spacing D2 allows to have wide tips of the guard teeth 11. If, as shown, the narrow teeth 12 are additionally retracted (do not extend up to the skin contact edge L2), the tips 15 could be made even wider than would be allowed for equally long guard teeth 11 and narrow teeth 12, as the retracted narrow teeth 12 leave enough space for hairs to become fed into the tooth gaps 13 even with those very wide tips 15 as shown. Hence, in the discussed embodiment, the width Wg of the tips 15 of the guard teeth 11 (the width W_{g} is defined as the maximum extension in y direction of the widened tip 15) is larger than the average spacing distance D_{avg} between the trimmer comb teeth. Here, having an alternating arrangement of guard teeth 11 and narrow teeth 12, the average spacing distance D_{avg} is half the spacing distance D1 between pairs of a guard tooth 11 and a narrow tooth 12. In a non-periodic arrangement of guard teeth 11 and narrow teeth 12, the overall width of the toothed front side of the trimmer comb in y direction divided by the number of teeth defines the average spacing distance D_{avg}. Generally, the guard teeth 11 cover an area A1 (measured from their basis at the base sheet 10) in the trimmer comb plane that is larger than the area A2 of the narrow teeth 12. For the shown specific embodiment, the width W_{g} of the tips 15 of the guard teeth 11 could be about 0.7 mm while an average spacing distance between tooth gaps 13 of about 0.45 mm is achieved. The width of the tip 15' of a narrow tooth 12 would be measured at a line where the tapered part of the narrow tooth 12 merges with the rounded tip portion. If the tip 15' of a narrow tooth 12 would be flat at the front, the width of the flat front would be taken as the width of the tip 15' of the narrow tooth 12.

In Fig. 2 it is also shown that the length E2 of the narrow teeth 12 (the extension of the narrow teeth 12 from the basis at the base sheet 10 to the tip measured in x direction) is smaller than the length E1 of the guard teeth 11. In this embodiment, the advantages of a reduced geometry obtained by narrow teeth 12 having a smaller width than the guard teeth 11 and by narrow teeth 12 being retracted are combined. As the definition of the width of a trimmer comb tooth is rather ambiguous for specific tooth geometries, it is clearer to state that the base spacing D2' of the narrow teeth 12 (the base spacing D2' being the centre-to-centre distance between the tooth gap 13 on one side of a narrow tooth 12 to the tooth gap 13 on the other side of the narrow tooth 12) is smaller than the base spacing D2 of the guard tooth 11. It is the gist of the present invention to allow for good skin protection while allowing for a high cutting efficiency by having a reduced geometry of the narrow teeth (the tip area being discarded from the definition of the reduced geometry, as the tips of the guard teeth 11 are anyhow wider than the tips of the narrow teeth 12). This can exemplary be achieved by a combination of those two factors, the reduction of the spacing distance of the narrow teeth 12 and the retraction of the narrow teeth 12. Various realizations of this general concept of the reduced geometry can therefore be realized by only having a reduced base spacing of the narrow teeth 11 or only having a retraction of the narrow teeth 12 or by a combination of both or by any other suitable reduction of geometry of the narrow teeth 12.

In Fig. 3 a schematic frontal view onto the toothed front side of an exemplary embodiment of a trimmer comb 1 (combining different features of trimmer combs as proposed) and of an associated trimmer blade 8 is shown. A Cartesian coordinate system with axis y (longitudinal extension direction) and axis z (height extension direction) is indicated. The trimmer blade 8 comprises a base sheet 80 and a toothed front side having trimmer blade teeth 81. Even though the trimmer blade 8 is depicted with some distance to the trimmer comb 1, the mounted trimmer blade 8 is contacting the trimmer comb 1 at least at the toothed front side in a tight-fit manner, usually under pre-stress, e.g. applied by a spring (not shown). In a use operation, the trimmer blade 8 and the trimmer comb 1 are moved relatively to each other in an oscillatory manner, as indicated by double arrow R. The trimmer comb 1 comprises a base sheet 10 having guard teeth 11 and narrow teeth 12. In between the guard teeth 11 and the narrow teeth 12 teeth gaps 13 are formed into which hairs feed in. In this schematic frontal view, the guard teeth 11 have a cross sectional area C1 defined by the tips 15 of the guard teeth that is larger than the cross sectional area C2 defined by the tips 15' of the narrow teeth 12. In another exemplary embodiment, the cross sections C1 could overlap with the cross sections C2, e.g. if the guard teeth 11 have mushroom-head shaped tips 15 as depicted in Fig. 2 that partially cover the tips 15' of the narrow teeth 12 when frontally viewed.

In the centre of the trimmer comb 1 as depicted in Fig. 3, two guard teeth 11 are shown that have a thickened tip 11 d, which thickened tip 11 d comprises a spherical tip portion that is formed on the skin side S1 of the trimmer comb. Instead of only designing guard teeth 11 with wide tips in y direction, the tips of the guard teeth 11 could also be thickened in z direction. The manufacturing and further details of such very large thickened tips 11d will be discussed further below. On the right hand side of Fig. 3 another embodiment of a thickened tip 11 d' of a guard tooth 11 is schematically depicted. The tip 11 d' is only slightly thickened in z direction when compared to the tips 11d. Such thickened tips 11d' are known, e.g. from the Braun Lady Shaver trimmer combs.

In the following, a specific embodiment of a trimmer comb for reduced risk for skin injuries and/or irritations and pleasing skin contact sensation is discussed. This specific embodiment is characterized by thickened tips (thickened in z direction, as indicated in Fig. 3) of guard teeth. A specific process is described to enable the manufacturing of extremely large thickened tips in comparison to the base sheet thickness. As is described in JP 02-052688, it is known to have hemispherical trimmer comb tips for a gentle skin feeling, but this document describes a manufacturing process of a trimmer comb involving sintering of ceramic powder, which is a very costly process. Further, in international patent application WO 2007/06177 A2 it is also described to use thickened tooth tips to reduce the possibility of hooking of the trimmer comb teeth into skin pores or hair channels, but this document does not describe any manufacturing possibilities of thickened tips. While the following embodiment is described with respect to a plurality of guard teeth having thickened tips and a plurality of narrow teeth that are arranged in an alternate manner, it is to be understood that the described solution to the object of providing a trimmer comb with improved skin contact sensation can also be employed for trimmer combs having only guard teeth.

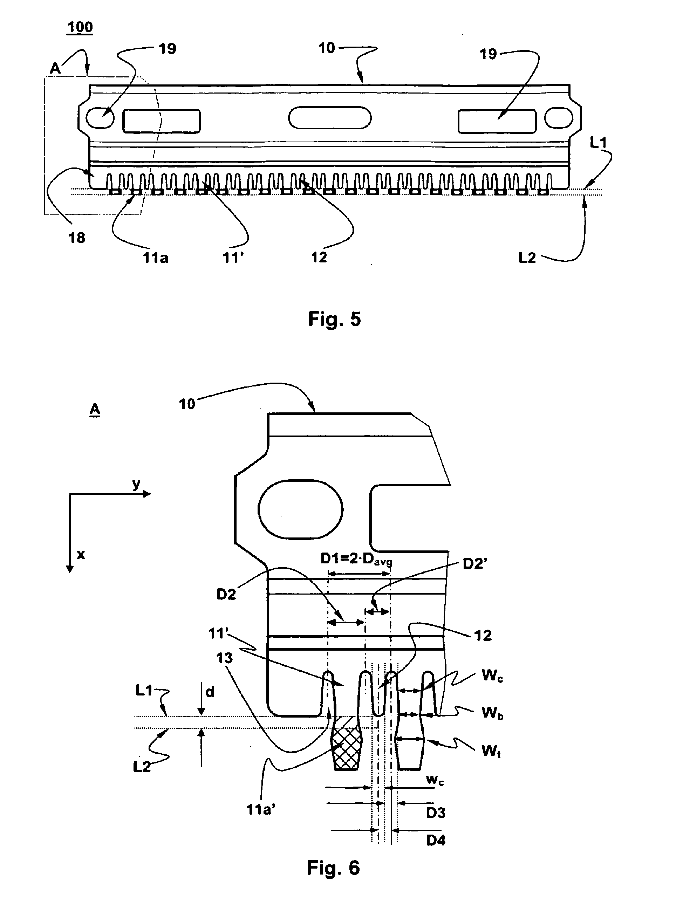

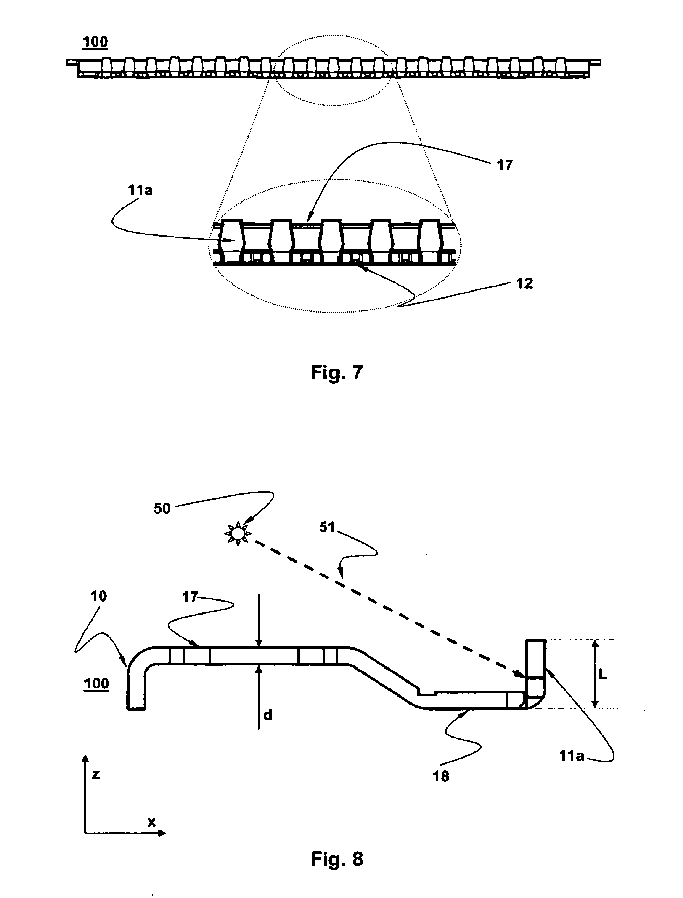

Fig. 4 shows a perspective view onto an intermediate trimmer comb 100 in an intermediate manufacturing step after a base sheet 10 was punched and folded into the shown form. A detail of the intermediate trimmer comb 100 is magnified for improved visibility of details of the toothed front side. The base sheet 10 has an elevated middle section 17 that has perforations 19 for placing the final trimmer comb onto a carrier and for providing guiding slots as is known in the art. The trimmer comb 100 has a toothed front side of which a detail is magnified. The toothed front side comprises intermediate guard teeth 11' and narrow teeth 12 arranged side-by-side in an alternating manner. The intermediate guard teeth 11' have a bent over portion 11 a. It is to be understood that the step of forming a base sheet into an intermediate trimmer comb 100 (e.g. by punching or etching) and the step of bending over the bent-over portions 11a of the intermediate guard teeth 11' could be a single integrated step (e.g. a punching step in which the protrusions 11 a' of the intermediate guard teeth 11' are folded as an effect of a preformed negative into which the base sheet 10 is pressed during punching). In the folding part of the punching and folding step, also other parts of the base sheet 10 could become folded or elevated as, e.g., the elevated section 17 (it is referred to Fig. 8, a side view of the intermediate trimmer comb, in which the elevated section 17 is clearly depicted). In an exemplary realization, the various steps of punching out the teeth 11, 12 and the perforations 19 (Fig. 6) and folding the elevated section 17 into the base sheet and bending over the bent-over portions 11 a could are individual steps performed by a follow-on composite tool. Instead of punching other known techniques could be used to form the teeth, e.g. etching, wire erosion, laser cutting, or water jet cutting.

Fig. 5 shows a top view onto the intermediate trimmer comb 100 as depicted in Fig. 4. Details about the intermediate guard teeth 11' and the narrow teeth 12 are shown in and discussed with reference to Fig. 6. In the shown embodiment, the narrow teeth 12 extend from their basis at the base sheet 10 until a line L1 and the intermediate guard teeth 11' are bent over in such a manner that they extend from their basis at the base sheet 10 until a line that essentially will become a skin contact edge L2 of the final trimmer comb (shown in Fig. 8). The intermediate trimmer comb 100 has two non-toothed side portions 18 concluding the toothed front side.

Instead of an intermediate trimmer comb 100 with a linear skin contact edge L2, the intermediate trimmer comb 100 could also have a curved skin contact edge L2. In other embodiments, two or a multiplicity of narrow teeth 12 could be arranged between two intermediate guard teeth 11'. While the subject matter of the description covers also embodiments with one single tooth geometry (only intermediate guard teeth 11' are arranged side by side), it is to be noted that an alternate arrangement of intermediate guard teeth 11' and narrow teeth 12 in combination with narrow tooth gaps allows the manufacture of relatively large sized thickened tips while ensuring a high cutting efficiency and optimized reduction of the risk of skin injuries.

In Fig. 6, a detail A of the intermediate trimmer comb as depicted in Fig. 5 is shown, but with the bent-over portions 11 a, which are shown in Fig. 5 in a bent over state, shown as protrusions 11 a' before bending for sake of clarity of the depiction. Intermediate guard teeth 11' and narrow teeth 12 are arranged side-by-side in an alternate manner. The narrow teeth 12 extend from their basis at the base sheet 10 until a line L1 and the intermediate guard teeth 11' are bent over (as shown in Figs. 4 and 5) at a line L2 that will essentially become the skin contact edge of the final trimmer comb. The distance between the line L1 and the line L2 is about the thickness d of the base sheet material (it is referred to Fig. 8, where the thickness d of the base sheet material is indicated). The intermediate guard teeth 11' and the narrow teeth 12 are tapered towards the line L1. The spacing distance between a pair of a guard tooth 11 and a narrow tooth 12 is D1, so that the average spacing distance between the teeth of the proposed comb is D_{avg} = D1/2. The base spacing of an intermediate guard tooth (and hence of a guard tooth 11 in its final stage as discussed further below) measured between a base centre of a tooth gap 13 on one side of an intermediate guard tooth 11' to the base centre of a tooth gap 13 on the other side of the same intermediate guard tooth 11' is D2 and the base spacing of a narrow tooth 12 measured between a base centre of a tooth gap 13 on one side of a narrow tooth 12 to the base centre of a tooth gap 13 on the other side of the same narrow tooth 12 is D2', so that D1 = D2 + D2' = 2 D_{avg}. It is a specific feature of the discussed embodiments that D2 > D2', as the smaller base spacing D2' of the narrow teeth 12 leads to the good cutting efficiency, while the larger base spacing D2 of the guard teeth 11 allows to have wide tips of the guard teeth 11 of the final trimmer comb. The centre width of the guard teeth 11 is W_{c} and the centre width of the narrow teeth 12 is W_{c}. In one embodiment, W_{c} is about 0.5 mm and W_{c} is about 0.3 mm. The intermediate guard teeth 11' have a width W_{b} at line L1 that is smaller than the centre width of the guard teeth, W_{b} < W_{c}. The protrusion 11 a' of the intermediate guard teeth 11' first broadens to a middle section of the bent-over portion 11 a, where the bent-over portion 11 a has a width Wₜ, and than the protrusion 11 a' tapers again. As will be discussed in connection with Fig. 8, the protrusion 11 a' provides base sheet material for manufacturing a thickened tip much thicker than the base sheet material by melting the bent-over portion 11a and the broadened middle section of the protrusion 11 a' was found to improve the manufacturing process. Nevertheless, it is to be understood that any other form of the protrusion 11a' is also encompassed by the description. The centre width of a tooth gap 13 is D3, which in an exemplary embodiment is about 0.3 mm or less. The centre-to-centre distance between a narrow tooth 12 and an adjoining tooth gap 13 is D4, which is in the shown embodiment equal to the centre width D3 of a tooth gap 13 or equal to the centre width W_{c} of a narrow tooth 12, hence, W_{c} = D3 = D4. Nevertheless, any variation to these geometric parameters is also possible and may be chosen according to the desired reduction in possible skin injuries (via skin penetrating through the tooth gaps and getting cut) and the desired cutting efficiency (the smaller the tooth gaps 13 are in comparison with the narrow tooth 12, the lower the cutting efficiency will become). As mentioned before, the subject matter of the description also covers embodiments where only guard teeth 11 are arranged side-by-side, e.g. if a thick base sheet 10 is used and wide tooth gaps 13 can be accepted as the skin will not penetrate through the tooth gaps of a thick base sheet.

Fig. 7 shows a frontal view onto the toothed front side of the intermediate trimmer comb 100. A detail of the frontal view is magnified for improved visibility of details. The bent-over portions 11 a of the intermediate guard teeth can be seen as well as the narrow teeth 12. The elevated section 17 of the base sheet is also visible. As is known in the art, the elevated section 17 is used for reduced friction between the final trimmer comb and the trimmer blade (not shown).

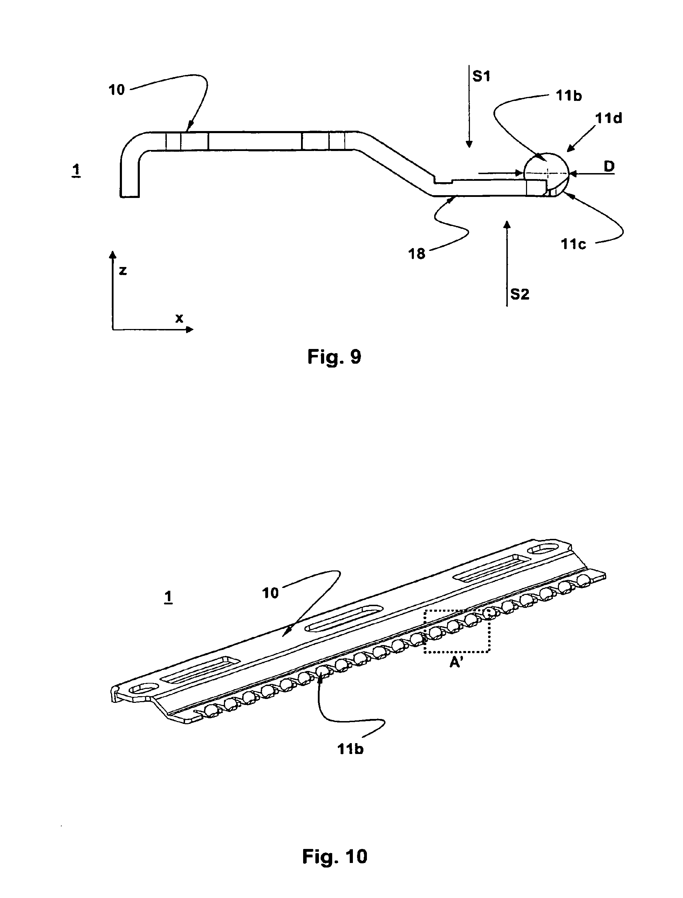

In Fig. 8 a side view onto the intermediate trimmer comb 100 is shown. The elevated section 17 of the base sheet 10 is clearly visible. The thickness d of the base sheet 10 is indicated. In the shown embodiment, a base sheet thickness of d = 0.3 mm is chosen to ensure that hairs are cut as close to the skin as possible and to allow for a low tooth spacing. In this side view also the non-toothed side section 18 of the intermediate trimmer comb 100 is depicted as well as the bent-over portion 11a of an intermediate guard tooth. In Fig. 6 it is also indicated that a beam of energy 51 emitted from an energy source 50 is directed towards the bent-over portion 11a of the intermediate guard tooth. Such a beam of energy 51 could e.g. be a laser beam emitted from a laser source. Using a laser beam, it is advisable to surround the intermediate trimmer comb with a protective inert gas such as argon. When applying energy to the bent-over portion 11 a, the base sheet material (e.g. steel) provided by the bent-over portion 11 a melts and a molten tip portion results, so that the guard teeth 11 have extremely thickened tips as a result of the manufacturing process (as will be discussed in connection with Fig. 9).

In Fig. 9, a side view onto a trimmer comb 1 in its final stage is shown. The energy that was applied to the bent-over portions 11 a of the intermediate guard teeth 11' has molten most of the base sheet material provided by the bent-over portions 11 a and a molten tip portion 11b results. Due to the surface tension of the material in its molten state, an essentially spherical thickening will usually result. By fine-tuning the amount of energy applied to the bent-over portion 11 a it can be achieved that a non-molten remainder 11c of the bent-over portion 11 a and of the guard tooth 11 remains, so that the molten tip portion 11b is only formed on the skin side S1 of the trimmer comb 1. Specifically, the blade side S2 of the trimmer comb is not affected by the step of applying energy to the bent-over portions 11 a and the non-molten remainder 11c is left over. The side S2 of the toothed front side may be grinded or polished to assure optimal flatness and hence optimal contact with the trimmer blade.

When mounted in a hair trimmer device, the trimmer comb 1 will contact the skin with its skin side S1. Hence, the smooth molten tip portions 11b will contact the skin and a pleasant skin contact sensation results. As the process of manufacturing the molten tip portions 11b allows spherical thickenings 11b that have a diameter D that is much larger than the thickness d of the base sheet 10 (in the shown embodiment, a diameter D of 0.7 mm is achieved, which is more than twice the thickness d = 0.3 mm of the base sheet material), a thin base sheet 10 can be used while thickened tips of the guard teeth 11 can be provided that are large enough to effectively reduce any hooking of the guard tooth tips into skin pores or hair channels. It is also to be noted that the diameter D of the molten tip portion (or the width measured in longitudinal extension direction y) is in the discussed embodiment slightly larger than the average spacing distance D_{avg} between the teeth of the proposed comb, where D = 0.7 mm and D_{avg} = 1.35 mm/2. The proposed reduced geometry of the narrow teeth 12 obtained by a combination of retracted narrow teeth 12 and of a small base spacing D2' (as indicated in Fig. 6), where D2' = 0.55 mm in comparison to the base spacing D2 = 0.8 mm of the guard teeth 11 in the exemplary embodiment, allows having thickened tip that are wider (diameter D) in y direction than the average spacing distance D_{avg}. Various deviations to these geometric parameters of the shown exemplary embodiment are of course possible and are encompassed by the subject matter of the description.

Fig. 10 shows a perspective view onto the trimmer comb 1 in its final stage.

Fig. 11 shows a magnification of the detail A' that is indicated in Fig. 10. The magnification shows the molten tip portions 11b that had been formed at the tips of the guard teeth 11 by applying energy to the bent-over portions 11a so that the material provided by the bent-over portions 11a was (mostly) molten. By fine-tuning the amount of energy applied to the bent-over portions 11a, it can be achieved that non-molten remainders 11c of the bent-over portions 11a remain, so that the molten tip portions 11b are only formed on that side of the trimmer comb 1 to which the bent-over portions 11a were bent over (which here is the skin side S1 as depicted in Fig. 9). The blade side S2, as depicted in Fig. 9, would in this case not be affected by the melting process and burrs and/or sharp edges are not formed at the blade side even if the blade side is grinded and/or polished after the step of applying energy to the bent-over portions 11a and melting them. The guard teeth 11 of the trimmer comb 1 in its final stage do not extend beyond the skin contact edge L2, as depicted in Fig. 5, as in the step of applying energy to the bent-over portions 11a, the melting material topples over onto the guard teeth 11 or sinks into the molten mass, specifically when the energy is applied onto the side of the bent-over portions 11a that faces the base sheet 10, as is depicted in Fig. 8. In the shown embodiment, the narrow teeth 12 do extend until about the centre of the molten tip portions 11b of the guard teeth 11. In this embodiment, hooking of the tips of the narrow teeth 12 into skin pores or hair channels is effectively avoided as the tips of the narrow teeth 12 cannot contact the skin. Further, as the narrow teeth 12 do not extend to the skin contact edge L2 (as depicted in Fig. 5), hairs can easily feed into the teeth gaps 13. It is again noted that the guard teeth 11 have a centre width (W_{c} in Fig. 6) that is wider that the centre width (w_{c} in Fig. 4) of the narrow teeth 12 and hence allow for large molten tip portions 11b that press the skin down (while providing a pleasant skin contact sensation) and also do not hook into skin pores or hair channels. The narrow teeth 12 arranged between the guard teeth 11 allow for high cutting efficiency. The specific manufacturing process as described above further allows for using a thin base sheet 10 (e.g. about 0.3 mm), while molten tip portions 11b can be formed that have a diameter much larger than the base sheet thickness (in the embodiment shown, the diameter of the spherical thickening is about 2.3 times as large as the base sheet thickness).

For sake of clarity it is noted that an intermediate guard tooth 11' relates to the intermediate trimmer comb and comprises a tooth portion that extends from the base sheet and either a protrusion 11a' or a bent-over portion 11a, depending on the manufacturing stage of the intermediate trimmer comb; the guard tooth 11 relates to the trimmer comb in its final stage and comprises a tooth portion that extends from the base sheet and a molten tip portion 11b and, optionally, a non-molten remainder 11c.

Fig. 12 shows an exemplary hair removal device 300 that comprises a hair trimmer 200 in which a trimmer comb as described can be used. In this exemplary hair removal device, a hair trimmer device is combined with a wet shaver mounted on the back of the hair removal device. Such a hair removal device is specifically suitable for body grooming.

It is to be noted that any use of "include" or "comprise" in the description or the claims shall mean "include, but not necessarily limited to". Any use of "a" or "an" in the description or the claims in combination with a feature shall not limit this feature to be present only once but shall include also a multiple presence of the feature.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

All documents cited in the Detailed Description of the Invention are, in relevant part, incorporated herein by reference; the citation of any document is not to be construed as an admission that it is prior art with respect to the present invention. To the extend that any meaning or definition of a term in this written document conflicts with any meaning or definition of the term in a document incorporated by reference, the meaning or definition assigned to the term in this written document shall govern.

While particular embodiments of the present invention have been illustrated and described, it would be obvious to those skilled in the art that various other changes and modifications can be made without departing from the spirit and scope of the invention. It is therefore intended to cover in the appended claims all such changes and modifications that are within the scope of this invention.

## Claims

1. Trimmer comb (1) comprising a base sheet (10) with a toothed front side having at least a guard tooth (11) that has a thickened tip (11d) and is **characterized in that** it is made by a process that comprises the steps of
a. forming an intermediate guard tooth (11') having a protrusion (11a') that extends beyond a skin contact edge (L2),
b. bending the protrusion (11a') of the intermediate guard tooth (11') over to form a bent-over portion (11a) of the intermediate guard tooth (11'), and
c. applying energy to the bent-over portion (11a) so that a molten tip portion (11b) is formed.

2. Trimmer comb according to claim 1, wherein the molten tip portion (11b) generated in step c is formed only on a skin side (S1) of the base sheet (10) to which the protrusion (11a') was bent over in step b.

3. Trimmer comb according to any one of claims 1 to 2, having at least two guard teeth (11) and wherein at least a narrow tooth (12) protruding from the base sheet (10) and having a non-thickened tip is arranged between the two guard teeth (11).

4. Trimmer comb according to the previous claim, wherein the narrow tooth (12) is not extending up to the skin contact edge (L2), in particular wherein the narrow tooth extends up to about the centre of the molten tip portion (11b) of the guard tooth (11).

5. Trimmer comb according to any one of claims 3 to 4, wherein the centre width (w_{c}) of the narrow tooth (12) is smaller than the centre width (W_{c}) of the guard tooth (11), in particular wherein the centre width (w_{c}) of the narrow tooth (12) is smaller than the centre width (W_{c}) of the guard tooth (11) by about 20 percent, specifically where the centre width (w_{c}) of the narrow tooth (12) is smaller than the centre width (W_{c}) of the guard tooth (11) by about 30 percent or more and more specifically where the centre width (w_{c}) of the narrow tooth (12) is smaller than the centre width (W_{c}) of the guard tooth (11) by about 40 percent or more, wherein the centre width (W_{c}) is measured at a centre line between basis on the tooth and tip that is oriented perpendicular to the direction of extension of the tooth.

6. Trimmer comb according to any one of claims 3 to 5, wherein the narrow tooth (12) has a centre spacing distance (D4) to an adjoining tooth gap (13) that is less than the centre width (W_{c}) of the guard tooth (11), in particular narrow tooth (12) has a centre spacing distance (D4) to an adjoining tooth gap (13) that is about the centre width (w_{c}) of the narrow tooth (12), wherein the centre width (W_{c}) is measured at a centre line between basis on the tooth and tip that is oriented perpendicular to the direction of extension of the tooth.

7. Trimmer comb according to any one of claims 1 to 6, wherein the thickness (d) of the base sheet (10) at the toothed front side is lower than 0.4 mm, in particular lower than 0.35 mm and specifically lower or equal to 0.3 mm.

8. Trimmer comb according to any one of claims 1 to 7, wherein the molten tip portion (11b) has a diameter (D) that is at least two times as large as the thickness (d) of the base sheet (10).

9. Trimmer comb according to any one of claims 1 to 8, wherein the molten tip portion (11b) formed in step c is partially enclosed by a non-molten remainder (11c) of the bent-over portion (11a).

10. Trimmer comb according to any of claims 1 to 9, wherein the bent-over portion (11a) has a length (L) of about twice the thickness (d) of the base sheet (10), in particular a length (L) of about thrice the thickness (d) of the base plate (10), and more particularly a length (L) of about four times the thickness (d) of the base plate (10) or even more.

11. Trimmer comb according to any one of claims 1 to 10, wherein the protrusion (11a') has a middle section that is wider than the intermediate guard tooth (11') at the skin contact edge (L2).

12. Trimmer comb (1) comprising a base sheet (10) with a toothed front side having at least a guard tooth (11) that has a thickened tip (11d), **characterised in that** said thickened tip (11d) comprises a molten tip portion (11b) formed only on a skin side (S1) of the trimmer comb and a non-molten remainder (11c) concluding the thickened tip (11d) on a blade side (S2) of the trimmer comb.

13. Method of manufacturing a trimmer comb (1) comprising the steps of
a. forming a base sheet (10) having a toothed front side where at least a protrusion (11a') of an intermediate guard tooth (11') extends over a skin contact edge (L2) of the trimmer comb,
b. bending the protrusion (11a') over to a side of the base sheet (10), in particular bending the protrusion (11a') by an angle of about 90 degree, so that a bent-over portion (11a) is formed, and
c. applying energy from an energy source (50), in particular from a laser source, to the bent-over portion (11a) of the intermediate guard tooth (11') so that a molten tip portion (11b) is formed.

14. Method according to claim 13, wherein step a and step b are performed in a single process step, in particular wherein step a and step b are performed in a combined stamping and folding process.

15. Method according to claim 13 or 14, wherein in step c the energy is applied to a centre section of the bent-over portion (11a).

16. Method according to any one of claims 13 to 15, wherein the amount of energy applied to the bent-over portion (11a) is such that the molten tip portion (11b) remains partially enclosed by a non-molten remainder (11c), in particular wherein a blade side (S2) of the guard tooth (11) is concluded by the non-molten remainder (11c).

## Patentansprüche

1. Trimmerkamm (1), der ein Grundblatt (10) mit einer gezahnten Vorderseite mit mindestens einem Schutzzahn (11) umfasst, der eine verdickte Spitze (11d) aufweist und **dadurch gekennzeichnet ist, dass** er anhand eines Verfahrens hergestellt wird, das die folgenden Schritte umfasst
a. Bilden eines intermediären Schutzzahns (11') mit einem Vorsprung (11a'), der sich über einen Hautkontaktrand (L2) hinaus erstreckt,
b. Umbiegen des Vorsprungs (11a') des intermediären Schutzzahns (11'), um einen umgebogenen Abschnitt (11a) des intermediären Schutzzahns (11') zu bilden, und
c. Anlegen von Energie an den umgebogenen Abschnitt (11a), so dass ein geschmolzener Spitzenabschnitt (11b) gebildet wird.

2. Trimmerkamm nach Anspruch 1, wobei der in Schritt c erzeugte geschmolzene Spitzenabschnitt (11b) nur auf einer Hautseite (S1) des Grundblatts (10), zu der der Vorsprung (11a') in Schritt b umgebogen wurde, gebildet wird.

3. Trimmerkamm nach einem der Ansprüche 1 bis 2, der mindestens zwei Schutzzähne (11) aufweist und wobei mindestens ein schmaler Zahn (12), der von dem Grundblatt (10) hervorsteht und eine nicht verdickte Spitze aufweist, zwischen den zwei Schutzzähnen (11) angeordnet ist.

4. Trimmerkamm nach dem vorstehenden Anspruch, wobei sich der schmale Zahn (12) nicht bis zum Hautkontaktrand (L2) erstreckt, wobei sich der schmale Zahn insbesondere bis zu ungefähr der Mitte des geschmolzenen Spitzenabschnitts (11b) des Schutzzahns (11) erstreckt.

5. Trimmerkamm nach einem der Ansprüche 3 bis 4, wobei die Breite in der Mitte (w_{c}) des schmalen Zahns (12) kleiner ist als die Breite in der Mitte (Wᵥ) des Schutzzahns (11), wobei insbesondere die Breite in der Mitte (w_{c}) des schmalen Zahns (12) um ungefähr 20 Prozent kleiner ist als die Breite in der Mitte (W_{c}) des Schutzzahns (11), wobei insbesondere die Breite in der Mitte (w_{c}) des schmalen Zahns (12) um ungefähr 30 Prozent oder mehr kleiner ist als die Breite in der Mitte (W_{c}) des Schutzzahns (11) und wobei spezieller die Breite in der Mitte (w_{c}) des schmalen Zahns (12) um ungefähr 40 Prozent oder mehr kleiner ist als die Breite in der Mitte (W_{c}) des Schutzzahns (11), wobei die Breite in der Mitte (W_{c}) an einer Mittellinie zwischen der Basis des Zahns und der Spitze, die senkrecht zur Ausdehnungsrichtung des Zahns ausgerichtet ist, gemessen wird.

6. Trimmerkamm nach einem der Ansprüche 3 bis 5, wobei der schmale Zahn (12) einen von Mitte zu Mitte gemessenen Abstand (D4) zu einem angrenzenden Zahnzwischenraum (13) aufweist, der kleiner ist als die Breite in der Mitte (W_{c}) des Schutzzahns (11), wobei insbesondere der schmale Zahn (12) einen von Mitte zu Mitte gemessenen Abstand (D4) zu einem angrenzenden Zahnzwischenraum (13) aufweist, der ungefähr der Breite in der Mitte (w_{c}) des schmalen Zahns (12) entspricht, wobei die Breite in der Mitte (W_{c}) an einer Mittellinie zwischen der Basis des Zahns und der Spitze, die senkrecht zur Ausdehnungsrichtung des Zahns ausgerichtet ist, gemessen wird.

7. Trimmerkamm nach einem der Ansprüche 1 bis 6, wobei die Dicke (d) des Grundblatts (10) an der gezahnten Vorderseite kleiner als 0,4 mm, insbesondere kleiner als 0,35 mm und speziell kleiner als oder gleich 0,3 mm ist.

8. Trimmerkamm nach einem der Ansprüche 1 bis 7, wobei der geschmolzene Spitzenabschnitt (11b) einen Durchmesser (D) aufweist, der mindestens zwei Mal so groß ist wie die Dicke (d) des Grundblatts (10).

9. Trimmerkamm nach einem der Ansprüche 1 bis 8, wobei der in Schritt c gebildete geschmolzene Spitzenabschnitt (11b) teilweise von einem nicht geschmolzenen Rest (11c) des umgebogenen Abschnitts (11a) umgeben wird.

10. Trimmerkamm nach einem der Ansprüche 1 bis 9, wobei der umgebogene Abschnitt (11a) eine Länge (L) aufweist, die ungefähr zwei Mal die Dicke (d) des Grundblatts (10) ist, insbesondere eine Länge (L), die ungefähr drei Mal die Dicke (d) des Grundblatts (10) ist, und spezieller eine Länge (L), die ungefähr vier Mal die Dicke (d) des Grundblatts (10) oder noch größer ist.

11. Trimmerkamm nach einem der Ansprüche 1 bis 10, wobei der Vorsprung (11a') einen Mittelabschnitt aufweist, der breiter ist als der intermediäre Schutzzahn (11') am Hautkontaktrand (L2).

12. Trimmerkamm (1), umfassend ein Grundblatt (10) mit einer gezahnten Vorderseite, die mindestens einen Schutzzahn (11) mit einer verdickten Spitze (11d) aufweist, **dadurch gekennzeichnet, dass** die verdickte Spitze (11d) einen geschmolzenen Spitzenabschnitt (11b), der nur auf einer Hautseite (S1) des Trimmerkamms ausgebildet ist, und einen nicht geschmolzenen Rest (11c), mit dem die verdickte Spitze (11d) auf einer Klingenseite (S2) des Trimmerkamms abschließt, umfasst.

13. Verfahren zum Herstellen eines Trimmerkamms (1), das die folgenden Schritte umfasst
a. Bilden eines Grundblatts (10) mit einer gezahnten Vorderseite, wobei sich mindestens ein Vorsprung (11a') eines intermediären Schutzzahns (11') über einen Hautkontaktrand (L2) des Trimmerkamms hinaus erstreckt,
b. Umbiegen des Vorsprungs (11a') zu einer Seite des Grundblatts (10), insbesondere Biegen des Vorsprungs (11a') um einem Winkel von ungefähr 90 Grad, so dass ein umgebogener Abschnitt (11a) gebildet wird, und
c. Anlegen von Energie von einer Energiequelle (50), insbesondere von einer Laserquelle, an den umgebogenen Abschnitt (11a) des intermediären Schutzzahns (11'), so dass ein geschmolzener Spitzenabschnitt (11b) gebildet wird.

14. Verfahren nach Anspruch 13, wobei Schritt a und Schritt b in einem einzigen Verfahrensschritt durchgeführt werden, wobei insbesondere Schritt a und Schritt b in einem kombinierten Stanz- und Faltvorgang durchgeführt werden.

15. Verfahren nach Anspruch 13 oder 14, wobei in Schritt c die Energie an einen Mittelabschnitt des umgebogenen Abschnitts (11a) angelegt wird.

16. Verfahren nach einem der Ansprüche 13 bis 15, wobei eine solche Menge an Energie an den umgebogenen Abschnitt (11a) angelegt wird, dass der geschmolzene Spitzenabschnitt (11b) teilweise von einem nicht geschmolzenen Rest (11c) umgeben bleibt, wobei insbesondere eine Klingenseite (S2) des Schutzzahns (11) mit dem nicht geschmolzenen Rest (11c) abschließt.

## Revendications

1. Peigne de tondeuse (1) comprenant une feuille de base (10) avec un côté avant denté ayant au moins une dent de protection (11) qui a une extrémité épaissie (11d) et est **caractérisé en ce qu'**il est fabriqué par un procédé qui comprend les étapes consistant à
a. former une dent de protection intermédiaire (11') ayant une partie saillante (11a') qui s'étend au-delà d'un bord de contact avec la peau (L2),
b. replier la partie saillante (11a') de la dent de protection intermédiaire (11') de façon à former une partie repliée (11a) de la dent de protection intermédiaire (11'), et
c. appliquer de l'énergie sur la partie repliée (11a) de sorte qu'une partie d'extrémité fondue (11b) est formée.

2. Peigne de tondeuse selon la revendication 1, dans lequel la partie d'extrémité fondue (11b) générée dans l'étape c est formée uniquement sur un côté de peau (S1) de la feuille de base (10) sur lequel la partie saillante (1 la') a été repliée dans l'étape b.

3. Peigne de tondeuse selon l'une quelconque des revendications 1 à 2, ayant au moins deux dents de protection (11) et dans lequel au moins une dent étroite (12) dépassant de la feuille de base (10) et ayant une extrémité non épaissie est arrangée entre les deux dents de protection (11).

4. Peigne de tondeuse selon la revendication précédente, dans lequel la dent étroite (12) ne s'étend pas jusqu'au bord de contact avec la peau (L2), en particulier dans lequel la dent étroite s'étend environ jusqu'au centre de la partie d'extrémité fondue (11b) de la dent de protection (11).

5. Peigne de tondeuse selon l'une quelconque des revendications 3 à 4, dans lequel la largeur au centre (W_{c}) de la dent étroite (12) est plus petite que la largeur au centre (W_{c}) de la dent de protection (11), en particulier dans lequel la largeur au centre (w_{c}) de la dent étroite (12) est plus petite que la largeur au centre (W_{c}) de la dent de protection (11) d'environ 20 pour cent, spécifiquement où la largeur au centre (w_{c}) de la dent étroite (12) est plus petite que la largeur au centre (W_{c}) de la dent de protection (11) d'environ 30 pour cent ou plus et plus spécifiquement où la largeur au centre (w_{c}) de la dent étroite (12) est plus petite que la largeur au centre (W_{c}) de la dent de protection (11) d'environ 40 pour cent ou plus, dans lequel la largeur au centre (W_{c}) est mesurée à une ligne centrale entre la base de la dent et l'extrémité qui est orientée perpendiculaire à la direction d'extension de la dent.

6. Peigne de tondeuse selon l'une quelconque des revendications 3 à 5, dans lequel la dent étroite (12) a une distance d'espacement du centre (D4) à un écartement de dent attenante (13) qui est inférieure à la largeur au centre (W_{c}) de la dent de protection (11), en particulier la dent étroite (12) a une distance d'espacement du centre (D4) à un écartement de dent attenante (13) qui est d'environ la largeur au centre (W_{c}) de la dent étroite (12), dans lequel la largeur au centre (W_{c}) est mesurée à une ligne centrale entre la base de la dent et l'extrémité qui est orientée perpendiculaire à la direction d'extension de la dent.

7. Peigne de tondeuse selon l'une quelconque des revendications 1 à 6, dans lequel l'épaisseur (d) de la feuille de base (10) au côté avant denté est inférieure à 0,4 mm, en particulier inférieure à 0,35 mm et spécifiquement inférieure ou égale à 0,3 mm.

8. Peigne de tondeuse selon l'une quelconque des revendications 1 à 7, dans lequel la partie d'extrémité fondue (11b) a un diamètre (D) qui est au moins deux fois plus grand que l'épaisseur (d) de la feuille de base (10).

9. Peigne de tondeuse selon l'une quelconque des revendications 1 à 8, dans lequel la partie d'extrémité fondue (11b) formée dans l'étape c est partiellement entourée par une partie restante non fondue (11c) de la partie repliée (11a).

10. Peigne de tondeuse selon l'une quelconque des revendications 1 à 9, dans lequel la partie repliée (11a) a une longueur (L) d'environ deux fois l'épaisseur (d) de la feuille de base (10), en particulier une longueur (L) d'environ trois fois l'épaisseur (d) de la plaque de la base (10), et plus particulièrement une longueur (L) d'environ quatre fois l'épaisseur (d) de la plaque de la base (10) ou même plus.

11. Peigne de tondeuse selon l'une quelconque des revendications 1 à 10, dans lequel la partie saillante (11a') a une section du milieu qui est plus large que la dent de protection intermédiaire (11') au bord de contact avec la peau (L2).

12. Peigne de tondeuse (1) comprenant une feuille de base (10) avec un côté avant denté ayant au moins une dent de protection (11) qui a une extrémité épaissie (11d), **caractérisé en ce que** ladite extrémité épaissie (11d) comprend une partie d'extrémité fondue (11b) formée uniquement sur un côté de peau (S1) du peigne de tondeuse et une partie restante non fondue (11c) concluant l'extrémité épaissie (11d) sur un côté de lame (S2) du peigne de tondeuse.

13. Procédé de fabrication d'un peigne de tondeuse (1) comprenant les étapes consistant à
a. former une feuille de base (10) ayant un côté avant denté où au moins une partie saillante (11a') d'une dent de protection intermédiaire (11') s'étend sur un bord de contact avec la peau (L2) du peigne de tondeuse,
b. replier la partie saillante (11a') sur un côté de la feuille de base (10), en particulier en pliant la partie saillante (11a') selon un angle d'environ 90 degrés, de sorte qu'une partie repliée (11a) est formée, et
c. appliquer de l'énergie d'une source d'énergie (50), en particulier d'une source laser, à la partie repliée (11a) de la dent de protection intermédiaire (11') de sorte qu'une partie d'extrémité fondue (11b) est formée.

14. Procédé selon la revendication 13, dans lequel l'étape a et l'étape b sont effectuées en une seule étape de procédé, en particulier dans lequel l'étape a et l'étape b sont effectuées dans un procédé combiné d'estampage et de pliage.

15. Procédé selon la revendication 13 ou 14, dans lequel dans l'étape c l'énergie est appliquée à une section centrale de la partie repliée (11a).

16. Procédé selon l'une quelconque des revendications 13 à 15, dans lequel la quantité d'énergie appliquée à la partie repliée (11a) est telle que la partie d'extrémité fondue (11b) demeure partiellement entourée par une partie restante non fondue (11c), en particulier dans lequel un côté de lame (S2) de la dent de protection (11) est conclue par la partie restante non fondue (11c).
